Europäisches Patentamt

(19) European Patent Office

Office européen des brevets

(11) Veröffentlichungsnummer: **0 026 912**
**B1**

(12) **EUROPÄISCHE PATENTSCHRIFT**

(45) Veröffentlichungstag der Patentschrift:
18.05.83

(51) Int. Cl.³: **A 61 J 1/00,** C 08 L 27/00,
C 08 K 5/00

(21) Anmeldenummer: **80105930.4**

(22) Anmeldetag: **01.10.80**

(54) **Behälter für Blutplättchen-Konzentrat.**

(30) Priorität: **09.10.79 US 83136**

(43) Veröffentlichungstag der Anmeldung:
**15.04.81 Patentblatt 81/15**

(45) Bekanntmachung des Hinweises auf die Patenterteilung:
**18.05.83 Patentblatt 83/20**

(84) Benannte Vertragsstaaten:
**AT BE CH DE FR GB IT LI NL SE**

(56) Entgegenhaltungen:

**CH-A-462 036**
**DE-A-1 946 761**
**DE-B-1 766 168**
**DE-B-2 503 182**
**FR-A-2 330 606**
**GB-A-2 001 006**
**GB-A-2 001 657**
**US-A-4 119 267**
**GACHTER, MÜLLER «Kunststoff-Additive», Carl Hauser**
**Verlag 1979 MÜNCHEN (DE), WIEN (AT) Seiten 177,**
**181, 524, 528**

(73) Patentinhaber: **Cutter Laboratories, Inc., Fourth and
Parker Streets, Berkeley California 94710 (US)**

(72) Erfinder: **Warner, Willis L., 39 Bret Harte Road, San
Rafael California 94901 (US)**
Erfinder: **Nelson, Edward J., 150 Auburn Street, San
Rafael California 94901 (US)**

(74) Vertreter: **Adrian, Albert, Dr. et al, BAYER AG c/o
Zentralbereich Patente Marken und Lizenzen,
D-5090 Leverkusen 1, Bayerwerk (DE)**

Behälter für Blutplättchen-Konzentrat

Die Erfindung betrifft ein verbessertes Polyvinylchloridgefäss für die Aufbawahrung von Blutplättchen.

Es gibt eine Anzahl von Personen, deren Blut einen Mangel an Blutplättchen aufweist, und bei denen daher die Gefahr ernsterer Komplikationen besteht, wenn sie sich einer Operation unterziehen müssen oder verletzt werden, da ihr Blut nicht ordnungsgemäss gerinnt. Bei diesen Personen ist die intravenöse Verabreichung von Konzentraten von Blutplättchen zum Zeitpunkt der Verletzung oder vor der Operation notwendig. Blutplättchenkonzentrate werden routinemässig nach allgemein angewandten Verfahren aus Blutplasma gewonnen und in Polyvinylchlorid (PVC)-beuteln von medizinischer Qualität entweder bei etwa 4°C oder bei etwa 22°C vor dem Gebrauch gelagert.

Leider bleibt die Unversehrtheit und einwandfreie Beschaffenheit der Blutplättchen nur sehr kurzzeitig erhalten, wenn sie bei 22°C aufbewahrt werden, und es bilden sich morphologische Veränderungen aus, wobei die normalen scheibenförmigen Blutplättchen zu kugelförmigen Zellen umgebildet werden, die nicht funktionstüchtig sind. Diese letztgenannten Formen werden abgebaut und sterben ab und werden aus dem Kreislauf ausgeschieden. Durch Markierung der Blutplättchen mit $^{51}$Cr kann der Überlebensgrad oder die Lebensdauer (prozentuale Erholung) lebensfähiger Zellen nach verschiedenen Zeiträumen nach der Injektion von Blutplättchenkonzentrationen bestimmt werden.

Als Folge des Verfahrens, nach dem die Blutplättchenkonzentrate gewonnen werden, enthalten sie Glucose (Dextrose), da das Blut in Beuteln aufgefangen wird, die gepufferte Antikoagulantien wie ACD (Säurecitrat-Dextrose) oder CPD (Citrat-Phosphat-Dextrose) enthalten. Während der Lagerung wandeln die Blutplättchen die Glucose in Milchsäure und Kohlendioxid ($CO_2$) um, die den pH-Wert erniedrigen. Von Murphy und Gardner [Blood, Bd. 46, Nr. 2 (1975) 209-218] wurden die $CO_2$- und Sauerstoffdrücke in verschiedenen Beuteln aus PVC und Polyäthylen (PE), die Plättchenkonzentrate enthielten, gemessen. Hierbei stellten sie fest, dass der Abfall des pH-Werts um so stärker war, je dicker die Wände der Beutel waren. Da Sauerstoff bekanntlich die Umwandlung von Glucose in Milchsäure unterdrückt, wurde gefolgert, dass der Wirkungsgrad des Sauerstofftransports in die Beutel und des $CO_2$-Transports aus den Beuteln von der Stärke der Beutelwände abhing. Bei einer gegebenen Blutplättchenzahl war die pH-Senkung aufbewahrter Konzentrate bei dünnwandigen Behältern bedeutend geringer. Konzentrate mit hohen Blutplättchenzahlen ($2 \times 10^6/mm^3$ und mehr), die in üblichen PVC-Beuteln mit erheblich stärkeren Wänden aufbewahrt wurden, hatten nach 3tägiger Lagerung einen pH-Wert von etwa 6,0 oder weniger. Murphy und Gardner [Blood, Bd. 35 (1970) 549-557] wiesen ferner nach, dass ein schlagartiger Verlust von Lebensfähigkeit in vivo stattfindet, wenn der pH-Wert während der Lagerung unter 6,0 fällt.

Leider sind beim Prozess der Gewinnung von Blutplättchenkonzentraten Beutel mit stärkeren Wänden notwendig, da die Beutel der Zentrifugierung mit hoher Geschwindigkeit unterworfen werden und rissbeständig sein müssen. Um den für Standard-PVC-Beutel erforderlichen Flexibilitätsgrad zu erreichen, enthält das PVC einen gewissen Anteil Di-2-äthylhexylphthalat (DEHP) als Weichmacher. Vor kurzem ergab sich eine zunehmende Besorgnis über die Möglichkeit schädlicher Wirkung von DEHP, das durch Auslagung in biologische Produkte gelangt, die in Standard-PVC-Behältern aufbewahrt und dann den Patienten durch Infusion verabreicht werden. Zwar enthält Polyäthylen keine Weichmacher, jedoch wäre es ebensowenig ein geeigneter Werkstoff für Beutel für die Aufbewahrung von Blutplättchenkonzentraten wie dünnwandige PVC-Beutel, da PE-Beutel während der Druckdampfsterilisation und/oder Zentrifugierung in hohem Masse zum Reissen neigen.

Die Probleme, welche bei der Verwendung von Blutbeuteln auf Basis von weichgemachtem PVC des Standes der Technik auftreten, werden eingehend in DE-B-1 766 168 diskutiert: Es sind dies insbesondere die Migration des Weichmachers in den Flüssigkeitsinhalt während der Lagerung und die oben beschriebenen Konzentrationsverschiebungen. In DE-B1-2 503 182 wird vorgeschlagen, Blutbehälter aus Weich-PVC herzustellen, welche ein Polyester-Polyurethan als Weichmacher enthalten. Ein solcher hochmolekularer Weichmacher ist zwar mit Blut nicht extrahierbar und führt somit nicht zur Anreicherung von potentiell toxischen Substanzen im Blut; unbefriedigend ist jedoch bei Blutbeuteln dieser Art nach wie vor die Durchlässigkeit für Kohlendioxid und Sauerstoff, was zu den oben diskutierten Nachteilen führt.

Aufgabe der vorliegenden Erfindung ist es daher, Kunststoffbehälter für die Lagerung von Blutplättchen aus einem Material zur Verfügung zu stellen, welches einerseits genügend Zugfestigkeit aufweist, um der Drucksterilisation und dem Zentrifugieren mit hoher Geschwindigkeit zu widerstehen, und andererseits gleichzeitig auch gute Durchlässigkeitseigenschaften für Kohlendioxid und Sauerstoff besitzt, so dass die Lebensdauer der Blutplättchen verlängert wird. Es wäre ein besonderer Vorteil, wenn die Lebensdauer der Plättchen über die übliche Lebensdauer von drei Tagen hinaus verlängert werden könnte. Zur Zeit müssen die Blutbanken Blutplättchen nach einer Lagerzeit von drei Tagen verwerfen, wodurch es schwierig und kostspielig wird, Vorräte für Notsituationen zu halten.

Es wurde nunmehr gefunden, dass Kunststoffbehälter aus Weich-PVC dem Reissen während der Druckhitzesterilisation und dem Zentrifugieren mit hoher Geschwindigkeit widerstehen und ausserdem eine ausgezeichnete Durchlässigkeit für Kohlendioxid und Sauerstoff aufweisen, wenn man PVC verwendet, welches Tri-2-äthylhexyltrimellitat (TOTM) als Weichmacher und gleichzeitig ein Wärmestabilisierungssystem enthält. Überraschenderweise haben Blutplättchen bei der Lagerung in einem derartigen Behälter eine Lebensdauer von mehr als 3 Tagen (wenigstens 5 Tage oder länger) bei etwa 22°C.

Gegenstand der Erfindung ist somit ein flexibler Behälter aus weichgemachtem Polyvinylchlorid zum Aufbewahen eines für die intravenöse Verabreichung geeigneten Konzentrats von lebensfähigen Blutplättchen, welcher dadurch gekennzeichnet ist, dass das Polyvinylchlorid als Weichmacher 30-50 Gew.-% Tri-2-äthylhexyltrimellitat und 3-5 Gew.-% eines Wärmestabilisierungssystems enthält.

Der erfindungsgemässe Behälter wird vorzugsweise in Form eines Beutels hergestellt, dessen Wände aus PVC-Folie bestehen, die mit 30-50 Gew.-%, vorzugsweise etwa 37 Gew.-%, TOTM und 3-5 Gew.-%, vorzugsweise etwa 3,5 Gew.-%, eines Wärmestabilisierungssystems, das für PVC-Kunststoffe von medizinischer Qualität geeignet ist (z.B. epoxidierten Pflanzenölen) weichgemacht ist. Typisch für letztere sind epoxidiertes Sojabohnenöl und epoxidiertes Leinöl. Obwohl es für den Erfindungsgegenstand nicht von entscheidender Bedeutung ist, enthält das Wärmestabilisierungssystem vorzugsweise geringe Mengen von weniger als 1 Gew.-%, vorzugsweise etwa 0,6 Gew.-%, einer Metallseife wie Zinkstearat, Calciumstearat oder dergleichen. Das PVC kann auch geringe Mengen (d.h. weniger als 0,5 Gew.-%) eines Gleitmittels wie Mineralöl enthalten.

Die in den erfindungsgemässen PVC-Behältern enthaltenen Weichmacher und sonstigen Zusatzstoffe sind zwar für sich als Additive für PVC bekannt (siehe die Veröffentlichung von Gachter und Müller «Kunststoff-Additive» im Carl Hauser Verlag, 1979, München, Wien, Seiten 177, 181, 524 und 528); es war jedoch nicht zu erwarten, dass die Verwendung einer Kombination dieser Zusatzstoffe in PVC-Blutbeuteln zu einer erheblich verbesserten Lagerbeständigkeit der Blutplättchen führt.

Die Wandstäkre des erfindungsgemässen Behälters kann im Bereich von 0,254 bis 0,508 mm (0,010 bis 0,020 Zoll), vorzugsweise 0,305 bis 0,406 mm (0,012 bis 0,016 Zoll) liegen, wobei etwa 0,381 mm (0,015 Zoll) besonders bevorzugt werden, damit Behälter mit genügender Zugfestigkeit, um den während ihres Gebrauchs auftretenden hohen Drücken zu widerstehen, erhalten werden. Folien, aus denen diese Beutel hergestellt werden, werden nach Verfahren, die in der Industrie allgemein bekannt sind, erhalten. Der Beutel enthält eine erwünschte Menge von Blutplättchen in einem Konzentrat gemäss den Erfordernissen der American Association of Blood Banks, d.h. es sollten wenigstens $5,5 \times 10^{10}$ Blutplättchen, die während einer Aufbewahrungszeit bis zu 3 Tagen bei 22°C lebensfähig sind, in 30 bis 50 ml Plasma vorhanden sein. Es wird jedoch erwartet, dass das Volumen der Blutplättchenkonzentrate in den PVC-Beuteln gemäss der Erfindung als Folge des stark verbesserten $O_2$- und $CO_2$-Transports durch die Folie, der dazu führt, dass der pH-Wert bei der gewünschten Höhe gehaltenwerden kann, kleiner als das zur Zeit erforderliche Minimum von 30 ml sein kann.

Standard-PVC-Folien, die zur Zeit für Beutel für die Lagerung von Blut oder Blutkomponenten, z.B. Blutplättchenkonzentrate, verwendet werden, enthalten etwa 25 Gew.-% Di-2-äthylhexylphthalat (DEHP) als Weichmacher. Es kann nachgewiesen werden, dass etwa 300 ppm dieses Weichmachers in Blutplättchenkonzentraten, die 3 Tage bei 22°C darin gelagert worden sind, enthalten sind. Unter den gleichen Bedingungen sind in Erythrozytenkonzentraten, die in Beuteln aus PVC, das etwa 37% Tri-2-äthylhexyltrimellitat als Weichmacher enthält, nur etwa 20 ppm oder weniger dieses Weichmachers vorhanden.

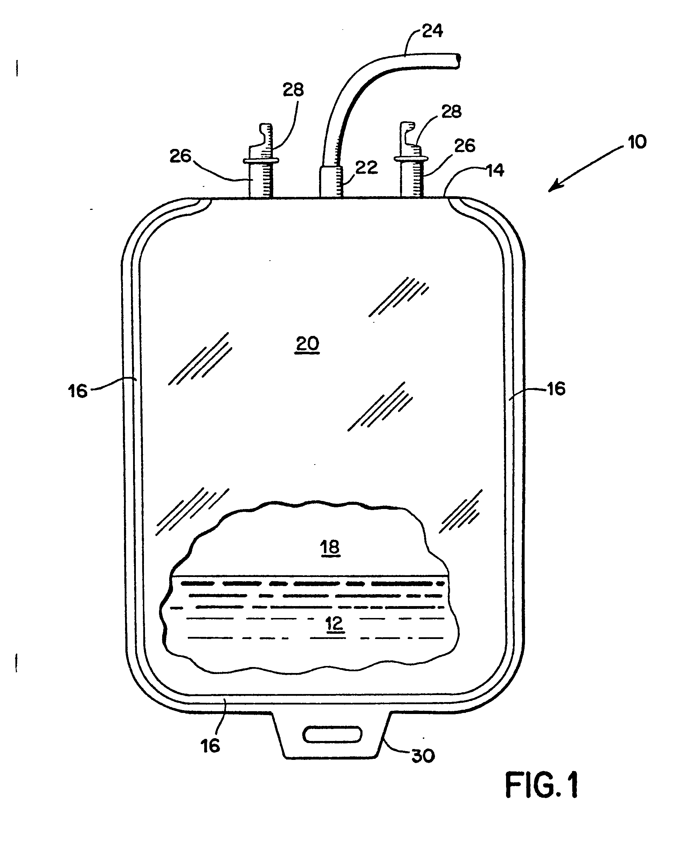

Die Erfindung wird nachstehend unter Bezugnahme auf die Abbildung weiter ausführlich erläutert.

Die Abbildung zeigt einen Beutel 10, der teilweise aufgeschnitten ist, um ein im Beutel aufbewahrtes Blutplättchenkonzentrat 12 sichtbar zu machen. Diese besondere Ausführungsform des Beutels ist aus einer Folie hergestellt, die am oberen Ende 14 umgefaltet und um ihre drei Ränder 16 unter Bildung der beiden Wände 18 und 20 heissgesiegelt worden ist. In einem typischen Blutbeutel hat die Innenfläche eine Grösse von wenigstens etwa 323 $cm^2$ (50 Quadratzoll). Der Beutel 10 ist mit einem Eintritt 22 versehen, der über einen Schlauch 24 mit einem (nicht dargestellten) primären Beutel, der zum Auffangen des Gesamtbluts dient, verbunden ist. Der Beutel 10 ist ferner mit einer oder mehreren Zugangsöffnungen 26, die mit geeigneten Kappen 28 verschlossen sind, und einem Aufhänger 30 versehen.

Die Folie, aus der der Beutel 10 hergestellt ist, enthält 100 Gew.-Teile Vinylchloridhomopolymeres (mittleres Molekulargewicht), 63 Gew.-Teile Tri-2-äthylhexyltrimellitat (TOTM) und 5 Gew.-Teile epoxidiertes Sojabohnenöl, 1 Gew.-Teil Calcium-Zink-Stearat und 0,5 Gew.-Teile Mineralöl. Alle diese Bestandteile sind im Handel erhältlich. Sie können in geeigneter Weise mit einem Mischer gemischt und nach üblichen Verfahren, z.B. durch Kalandrieren oder Strangpressen, zu Folien bzw. Grobfolien bis zu einer Dicke von etwa 0,381 mm verarbeitet werden.

Der Beutel 10, der mit einem zum Auffangen des Gesamtbluts verwendeten primären Beutel verbunden ist, wird zuerst unter Druck dampfsterilisiert und ist dann bereit für die Aufnahme der Erythrozyten. Das im primären Beutel aufgefangene Blut, das ein gepuffertes Antikoagulans, z.B. CPD, enthält, wird zuerst einer leichten Zentrifugierung unterworfen, um die roten Blutzellen zu sedimentieren, und die obere Schicht aus Plasma, das reich an Blutplättchen ist, wird dann in den Beutel 10 ausgedrückt. Durch Zentrifugieren mit hoher Geschwindigkeit sammeln sich die Blutplättchen am Boden des Beutels 10, und das an Erythrozyten arme Plasma kann dann in einen anderen Behälter ausgedrückt werden, Ungefähr 50 ml des Plasmas bleiben im Beutel 10, und die Erythrozyten sind in diesem Plasmavolumen suspendiert. Vor dem Gebrauch des Blutplättchenkonzentrats wird der Beutel bei Raumtemperatur sachte gedreht oder bewegt, um die Erythrozyten in Suspension zu halten und den Transport von Sauerstoff in das Konzentrat und den Durchgang von Kohlendioxid aus dem Innern des Beutels zu fördern und zu erleichtern.

Die Lebensdauer der Erythrozyten wurde in Abständen von 1, 2, 3 und 5 Tagen Lagerzeit bei 22°C in den das Tri-2-äthylhexyltrimellitat enthaltenden PVC-Beuteln (als PVC-TOTM bezeichnet) und in Standard-PVC-Beuteln, die die gleiche Wandstärke hatten und Di-2-äthylhexylphthalat enthielten (als PVC-DEHP bezeichnet), ermittelt. Hierzu wurde im wesentlichen die Methode angewandt, die von Murphy und Gardner [New Eng. J.Med. 280 (1969) 1094-1098] beschrieben wird. Die Ergebnisse sind in der folgenden Tabelle als prozentuale Ausbeute (oder Gewinnung) lebensfähiger Blutplättchen und Überlebensrate in vivo ($T^{1/2}$) genannt.

In-vivo-Untersuchungen von bei 22°C aufbewahrten Erythrozyten

| Beutel | Gewinnung, % | | | |
|---|---|---|---|---|
| | 1 Tag | 2 Tage | 3 Tage | 5 Tage |
| PVC-TOTM | 52,9[a](6)[b] | 59,2 (5) | 51,7 (10) | 50,6 (7) |
| PVC-DEHP | 60 (5) | — | 43 (5) | 37 (5) |

| Beutel | Überlebensrate, $T^{1/2}$ (Tage) | | | |
|---|---|---|---|---|
| | 1 Tag | 2 Tage | 3 Tage | 5 Tage |
| PVC-TOTM | 4,08 | 4,37 | 3,51 | 3,43 |
| PVC-DEHP | 3,75 | — | 3,45 | 2,6 |

(a) Durchschnittliche Prozentsätze der getesteten Zahl
(b) Zahl der getesteten Proben in Klammern

Die pH-Werte der Suspensionen von Erythrozyten in den PVC-TOTM-Beuteln blieben während dieser Lagerzeiten bemerkenswert konstant und betrugen im Durchschnitt 7,34, 7,03, 7,30 bzw. 7,26.

Die Kohlendioxiddurchlässigkeit durch die Wände der beiden Typen von Beuteln wurde gemäss ASTM D1434-66 «Gas Transmission Rate of Plastic Film and Sheeting» (Methode V) bestimmt. Sie betrug 4210 $cm^3/m^2$ pro Tag bei der PVC-TOTM-Folie und 3110 $cm^3/m^2$ pro Tag bei der PVC-DEHP-Folie. Die Sauerstoffdurchlässigkeiten betrugen 690 bzw. 468 $cm^3/m^2$ pro Tag.

Diese Ergebnisse zeigen eindeutig, dass Blutplättchen in Form von Konzentraten für den Gebrauch in vivo selbst nach 5tägiger Lagerung bei 22°C lebensfähig bleiben, wenn sie in hochfesten PVC-Beuteln, die etwa 37% Tri-2-äthylhexyltrimellat als Weichmacher enthalten, aufbewahrt werden. Ferner blieb die Morphologie der Blutplättchen bei Untersuchung unter dem Lichtmikroskop selbst nach 5tägiger Lagerung gut (Scheibenform). Im Gegensatz hierzu zeigen Blutplättchen, die in Standard-PVC-Beuteln, die Di-2-äthylhexylphthalat enthalten, aufbewahrt werden, eine erheblich verkürzte Lebensdauer, und ihre Morphologie ist deutlich schlechter.

## Patentansprüche

1. Flexibler Behälter aus weichgemachtem Polyvinylchlorid zum Aufbewahren eines für die intravenöse Verabreichung geeigneten Konzentrats von lebensfähigen Blutplättchen, dadurch gekennzeichnet, dass das Polyvinylchlorid als Weichmacher 30-50 Gew.-% Tri-2-äthylhexyltrimellat und 3-5 Gew.-% eines Wärmestabilisierungssystems enthält.

2. Behälter nach Anspruch 1, dadurch gekennzeichnet, dass die Wände des Behälters eine Stärke von etwa 0,381 mm haben.

3. Behälter nach Anspruch 1 oder 2, dadurch gekennzeichnet, dass die Menge des Tri-2-äthylhexyltrimellats etwa 37 Gew.-% beträgt.

4. Behälter nach Anspruch 1-3, dadurch gekennzeichnet, dass das Wärmestabilisierungssystem epoxidiertes Sojabohnenöl enthält.

5. Behälter nach Anspruch 4, dadurch gekennzeichnet, dass die Menge des epoxidierten Sojabohnenöls etwa 3,5 Gew.-% beträgt.

6. Behälter nach Anspruch 1-5, dadurch gekennzeichnet, dass das Wärmestabilisierungssystem geringe Mengen von weniger als 1 Gew.-%, vorzugsweise etwa 0,6 Gew.-%, einer Metallseife, wie Zinkstearat oder Calciumstearat oder deren Kombinationen enthält.

7. Behälter nach Anspruch 1-6, dadurch gekennzeichnet, dass das weichgemachte Polyvinylchlorid ein Mineralöl in einer Menge von weniger als 0,5 Gew.-% enthält.

## Revendications

1. Récipient flexible en chlorure de polyvinyle plastifié pour la conservation d'un concentré approprié pour l'administration intraveineuse de plaquettes sanguines vivables, caractérisé en ce que le chlorure de polyvinyle contient comme plastifiant 30 à 50% en poids de trimellitate de tri-2-éthylhexyle et 3-5% en poids d'un système de stabilisation à la chaleur.

2. Récipient selon la revendication 1, caractérisé en ce que les parois du récipient ont une épaisseur d'environ 0,381 mm.

3. Récipient selon la revendication 1 ou 2, caractérisé en ce que la quantité de trimellitate de tri-2-éthylhexyle s'élève à environ 37% en poids.

4. Récipient selon les revendications 1 à 3, caractérisé en ce que le système de stabilisation à la chaleur contient de l'huile de fève de soya époxydée.

5. Récipient selon la revendication 4, caractérisé en ce que la quantité d'huile de fève de soya époxydée s'élève à environ 3,5% en poids.

6. Récipient selon les revendications 1 à 5, caractérisé en ce que le système de stabilisation à la chaleur contient de petites quantités inférieures à 1% en poids, de préférence d'environ 0,6% en poids, d'un savon métallique comme le stéarate de zinc ou le stéarate de calcium ou leurs combinaisons.

7. Récipient selon les revendications 1 à 6, caractérisé en ce que le chlorure de polyvinyle plastifié contient une huile minérale en une quantité inférieure à 0,5% en poids.

**Claims**

1. A flexible container of plasticized polyvinyl chloride for storing a concentrate of viable blood platelets which is suitable for intravenous administration, characterised in that the polyvinyl chloride contains 30-50% by weight of tri 2-ethylhexyl trimellitate as plasticizer and 3-5% by weight of a heat stabilization system.

2. The container according to Claim 1, characterised in that the walls of the container have a thickness of about 0.381 mm.

3. The container according to Claim 1 or 2, characterised in that the amount of tri 2-ethylhexyl trimellitate is about 37% by weight.

4. The container according to Claim 1-3, characterised in that the heat stabilization system contains epoxidized soybean oil.

5. The container according to Claim 4, characterised in that the amount of epoxidized soybean oil is about 3.5% by weight.

6. The container according to Claim 1-5, characterised in that the heat stabilization system contains low amounts of less than 1% by weight, preferably about 0.6% by weight, of a metal soap, such as zinc stearate or calcium stearate or combinations thereof.

7. The container according to Claim 1-6, characterised in that the plasticized polyvinyl chloride contains a mineral oil in an amount of less than 0.5% by weight.

FIG.1